# EUROPEAN PATENT APPLICATION

(11) **EP 3 012 772 A1**
(43) Date of publication of application: **27.04.2016**
(21) Application number: 14814588.1
(22) Date of filing: 19.06.2014
(51) Int. Cl.: G06F 21/70

(54) **METHOD FOR ENCRYPTION VERIFICATION AND DECRYPTION VERIFICATION AND ELECTRONIC APPARATUS SUITABLE FOR SMALL MEMORY IMPLEMENTATION ENVIRONMENT**

(30) Priority: 20.06.2013 KR 20130070677
(71) Applicant: Chang, Dong Hoon, Seoul 157-905 (KR); Korea University Research and Business Foundation, Seoul 136-701 (KR)
(72) Inventor: HONG, Seokhie, Seoul 139-923 (KR); CHANG, Dong Hoon, Seoul 157-905 (KR)
(74) Representative: Maury, Richard Philip
(86) International application number: PCT/KR2014/005417
(87) International publication number: WO 2014/204231

(57) **Abstract**

A method for encryption authentication according to the present invention comprises the steps of: performing a first encryption operation by a first function using secret information; performing a second encryption operation by a second function using the result value of the first encryption operation without the secret information; and performing a third encryption operation by a third function using the result value of the first encryption operation or the result value of the second encryption operation and the secret information. Further, a method for decryption verification according to the present invention comprises the step of determining whether to output, to the decoding module, a value associated with the entire or partial value of the result value of the first encryption operation according to the result value of the third encryption operation.

## Description

### TECHNICAL FIELD

The present invention disclosed herein relates to a method for encryption authentication and decryption verification in an environment having restrictions in a memory use and an electronic apparatus including the same.

### BACKGROUND ART

Due to development of hacking and various attack techniques, as necessity of a cryptographic module-based crypto operations is emerged, researches on a cryptographic method based on a crypto module become more important. A crypto module, which has secret information such as a secret key value, a temporary secret key, a secret nonce, or a password, and a cryptographic function therein, performs calculations within the module in order to be safe from an external attacker. Accordingly, the secret information may be protected and desired calculations may be safely performed by using the secret information.

It is necessary to design the crypto module to be safe from various attacks such as side-channel attacks or fault injection attacks, and since design and implementation costs increase as the area of the crypto module becomes larger, there is a limitation in available memory size in the crypto module.

While message hashing or authentication is typically implemented only with a small-sized memory, for encryption authentication and decryption verification that request message encryption and authentication, and verification at the same time, even a part of information on a plaintext that is desired to be protected, except for public information (e.g. additional data or public nonce), should not be exposed before an authentication code is not verified. Here, the encryption authentication refers to a process for generating a ciphertext and an authentication code from a given plaintext (at this point, public information such as additional data and a public nonce may be given therewith) by using secret information, and the decryption verification refers to a process for checking whether the authentication code is correct by using the given ciphertext and authentication code (at this point, the public information such as the additional data and public nonce may be given therewith) by using the secret information, and recovering a correct plaintext (or message) for the ciphertext only when the authentication code is correct.

For most of typical decryption verification methods, as the size of a ciphertext becomes larger, a requested memory size increases. Accordingly, for most of existing decryption verification methods, the decryption verification for big data is not realizable in a crypto module in which a memory use is limited.

### DISCLOSURE OF THE INVENTION

### TECHNICAL PROBLEM

Most of existing encryption authentication and decryption verification methods have been developed and used without any criterion for a request amount of memory use for determining whether the ciphertext is altered. Alternatively, since the encryption authentication and decryption verification are different, there are limitations in view of efficiency of implementation and an implementation cost. This is because it is burdensome to independently implement the encryption authentication and decryption verification. In addition, due to developments of various attack techniques such as hacking, as necessity for a crypto module emerges, a crypto module-based encryption authentication and decryption verification method becomes important. However, most of currently existing encryption authentication and decryption verification methods do not refer to a memory use at the time of verifying ciphertext alteration. Above all, in most of these encryption authentication and decryption verification methods, as the size of a target ciphertext becomes longer, a requested memory amount increases. Accordingly, it is necessary to develop a method for efficiently verifying ciphertext alteration with a small amount of memory use and safely outputting a plaintext. In addition, since the encryption authentication and decryption verification processes are most similarly designed, overlapping parts are minimized, efficiency of implementation is improved, and an implementation cost may be saved.

### TECHNICAL SOLUTION

An embodiment of the present invention provides a method of encryption authentication and decryption verification of an electronic apparatus, which comprises a crypto module and a decryption module. The method includes: performing encryption authentication by performing a first crypto operation with a first function by using secret information, performing a second crypto operation with a second function by using a result value of the first crypto operation without the secret information, and performing a third crypto operation with a third function by using the result value of the first crypto operation or a result value of the second crypto operations and the secret information; and performing decryption verification by determining whether to output a value related to an entirety of or a part of the result value of the first crypto operation to the decryption module according to a result value of the third crypto operation.

In an embodiment, the secret information may be a secret key, temporary secret information, or a secret nonce.

In an embodiment, the secret information may be generated inside the crypto module.

In an embodiment, the first function may receive additional data from an outside of the crypto module.

In an embodiment, a result value of the first function may include at least one first output value or at least one second output value, wherein the at least one first output value is input to the second function.

In an embodiment, the second function may encrypt a plaintext into a ciphertext at a time of the encryption authentication.

In an embodiment, the third function may receive the at least one second output value of the first function or an output value of the second function, and generate an authentication code.

In an embodiment, the third function may compare the generated authentication code and an input authentication code at a time of the decryption verification to determine whether the authentication code is valid.

In an embodiment, a value associated to an entirety or a part of the at least one output value may not be output to the decryption module and the decryption operation may be terminated.

In an embodiment, when the authentication code is valid, the method may further include outputting a value associated with an entirety or a part of the at least one output value of the first function to the decryption module.

In an embodiment, the method may further include, in the decryption module, decrypting a plaintext by using the value associated with an entirety or a part of the at least one output value in the decryption module.

In an embodiment, the method may further include temporarily storing the at least one first output value or the at least one second output value in an internal memory of the crypto module.

In an embodiment of the present invention, an electronic apparatus includes: a crypt module configured to perform encryption authentication with a first function that uses secret information, a second function that does not use the secret information, and a third function that uses the secret information, or performing decryption verification with the first and third functions; and a decryption module configured to receive a result value of the first function according to a result value of the third function at the time of the decryption verification, and decrypt a plaintext by using a value associated with the result value of the first function.

In an embodiment, each of the first, second, and third functions may be based on a replacement function-based function.

In an embodiment, each of the first and third functions may perform the encryption authentication by using a shared secret key and a nonce.

In an embodiment, each of the first and third functions may perform the encryption authentication by using temporary secret information.

In an embodiment, each of the first, second, and third functions may be based on a block cipher-based function.

In an embodiment of the present invention, an method of encryption authentication and decryption verification of an electronic apparatus, which comprises a crypto module and a decryption module. The method includes: performing encryption authentication by a first crypto operation for generating a first output value by using an authentication code and secret information in a first function, performing a second crypt operation for outputting a ciphertext by using the first output value of the first crypto operation and a plaintext without the secret information in a second function, and generating the authentication code by using the secret information and the plaintext in a third function; and performing decryption verification by determining whether to output a value associated with an entirety or a part of a result value of the first crypto operation to the decryption module according to a result value of the third crypto operation.

In an embodiment, the first and third functions may perform the encryption authentication not by using a nonce value or a counter value, but by using a secret key shared between crypto modules.

In an embodiment, the first function may generate a cipher key to be used in the second function by using the shared secret key and the authentication code.

### ADVANTAGEOUS EFFECTS

As described above, since the encryption authentication and decryption verification method may be safely implemented with a small sized memory by using logic operations according to the present invention, secret information may be safely protected.

### BRIEF DESCRIPTION OF THE DRAWINGS

FIG. 1 is a block diagram of an exemplary electronic apparatus according to an embodiment of the present invention;
FIG. 2 illustrates a first embodiment of an encryption authentication method according to an embodiment of the present invention;
FIG. 3 is a flowchart of an exemplary encryption authentication method according to an embodiment of the present invention;
FIG. 4 is a block diagram of another exemplary electronic apparatus according to another embodiment of the present invention;
FIG. 5 illustrate an example of a replacement function-based encryption authentication method;
FIG. 6 illustrates a decryption verification process corresponding to the replacement function-based encryption authentication method illustrated in FIG. 5;
FIG. 7 illustrates an exemplary replacement function-based encryption authentication method for a case of using a secret nonce;
FIG. 8 illustrates a decryption verification process corresponding to the replacement function-based encryption authentication method illustrated in FIG. 7;
FIG. 9 illustrates an exemplary replacement function-based encryption authentication method using a temporary secret key pair (N, N');
FIG. 10 illustrates a decryption verification process corresponding to the replacement function-based encryption authentication method illustrated in FIG. 9;
FIG. 11 illustrates an example of a block cipher-based encryption authentication method;
FIG. 12 illustrates a decryption verification process corresponding to the block cipher-based encryption authentication method illustrated in FIG. 11;
FIG. 13 illustrates an exemplary block cipher-based encryption authentication method in which a checksum generating method and a padding method are changed;
FIG. 14 illustrates a decryption verification process corresponding to the block cipher-based encryption authentication method illustrated in FIG. 13;
FIG. 15 illustrates an exemplary block cipher-based encryption authentication method using a temporary secret nonce;
FIG. 16 illustrates a decryption verification process corresponding to the block cipher-based encryption authentication method illustrated in FIG. 15;
FIG. 17 illustrates an exemplary block cipher-based encryption authentication method in which a nonce or counter value is not used; and
FIG. 18 illustrates a decryption verification process corresponding to the block cipher-based encryption authentication method illustrated in FIG. 17.

### BEST MODE FOR CARRYING OUT THE INVENTION

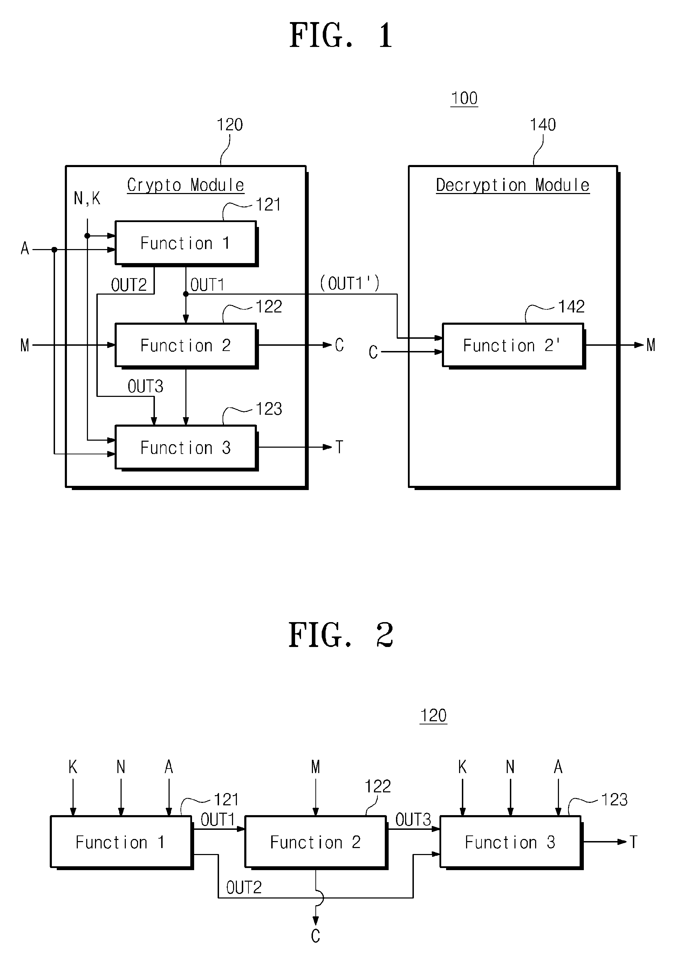

A drawing showing a best mode of embodiments of the present invention is FIG. 1.

### MODE FOR CARRYING OUT THE INVENTION

Hereinafter, an exemplary embodiment of the present invention will be described in detail with reference to the accompanying drawings such that a person skilled in the art may easily carry out the embodiments of the present invention.

Most of typical encryption authentication and decryption verification methods have been designed only to highlight efficiency at the time of encryption authentication, and have been developed and used without any criterion for a requested amount of memory use for determining whether the ciphertext is altered. Due to developments of various attack techniques such as hacking, as necessity for a crypto module emerges, a crypto module-based encryption authentication and decryption verification method becomes important. However, most of currently existing encryption authentication method does not refer to a memory use at the time of verifying ciphertext alteration. Above all, in most of these encryption authentication methods, as the size of a target ciphertext becomes longer, a requested memory amount increases. Accordingly, it is necessary to develop a method for efficiently verifying ciphertext alteration with a small amount of memory use and safely outputting a plaintext. In addition, in order to improve an implementation efficiency and save an implementation cost, the encryption authentication and decryption verification are to be similarly designed.

Typically, in a decryption verification process, an authentication code value is checked for determining forgery or alteration of a ciphertext. Accordingly, for most of the methods, a crypto module has double burden to store a ciphertext or plaintext therein, or to encrypt the plaintext again and deliver it to the outside in order to hide the plaintext, until the authentication code value is checked.

A method for performing encryption again for decryption verification lowers an implementation efficiency, and also increases an implementation cost. Above all, it results an increase in communication amount between the crypto module and an external device. The present invention suggests a logic design through which decryption is verifiable by storing only internal state values having small sizes without storing a ciphertext or a message (or a plaintext) in a crypto module. In addition, since the encryption authentication process and the decryption verification process are based on a similar crypto operation, an implementation efficiency may be improved and an implementation cost may be lowered. In addition, the present invention is also advantageous in that it is not necessary to deliver any internal state information to the outside before only a specific internal state value is to be delivered to the outside. Accordingly, it may be maximized to reduce a communication load between an external device and a crypto module.

A method of encryption authentication and decryption verification according to an embodiment of the present invention is performed in an electronic apparatus, which includes a crypto module and a decryption module. The encryption authentication method includes: performing encryption authentication by performing a first crypto operation with a first function by using secret information, performing a second crypto operation with a second function by using a result value of the first crypto operation without the secret information, and performing a third crypto operation with a third function by using the result value of the first crypto operation or a result value of the second crypto operation, and the secret information. The decryption verification method includes determining whether to output a value related to an entirety of or a part of the result value of the first crypto operation to the decryption module according to a result value of the third crypto operation.

FIG. 1 is a block diagram illustrating an exemplary electronic apparatus 100 for explaining a crypto module according to an embodiment of the present invention. Referring to FIG. 1, the electronic apparatus 100 include a crypto module 120 and a decryption module 140. Here, the electronic apparatus 100 may be all apparatuses requesting ciphers, for example, a computer, a tablet PC, a smartphone, a mobile phone, a smart card, a memory card, a sensor, an RFID, and an internet of things IOT, etc.

The crypto module 120 may include secret information such as a secret key, a temporary secret nonce, or a password, and a crypto function therein, and may perform a crypto operation to be safe from an external attacker. The crypto module 120 may be designed to be safe from various attacks such as side channel attacks or fault injection attacks, etc. Since design and implementation costs of the crypto module 120 increase as an area thereof becomes larger, there is a limitation in available memory size in the module. The configuration and operation principle of the crypto module 120 will be described below.

The crypto module 120 may implement a first function 121, a second function 122, and a third function 123 therein for encryption authentication.

The first function 121 receives additional data A from the outside, internally receives a nonce N and a secret key K, and generates at least one first output value OUT1 (or "a result value"), or at least one second output value OUT2 (or "a result value"). Here, the additional data A may be message head information. The first function may not use the additional data. In an embodiment, there may not be the second output value OUT2. When the nonce N is a public value, the value of nonce N may be input from the outside. The nonce value may be replaced with a public counter value. Instead of the secret key, temporary secret information such as a temporary secret nonce generated from the secret key may be received as an input.

The second function 122 receives a plaintext M from the outside and the first output value OUT1 from the first function 121, and generates a ciphertext C and at least one third output value OUT3 (or "result value"). In an embodiment, at the time of encryption operation, a plaintext M of a block unit is input and a ciphertext C of a block unit may be output. When there is a spare in memory size in the crypto module, the crypto operation may be performed in a unit of several blocks instead of a block unit. The second function may receive additional data, which is public information, public nonce value, or counter value, as an input besides the first output value and the plaintext.

The third function 123 receives the additional data A from the outside, the nonce N and secret key K from the inside, the second output value OUT2 from the first function 121, or the third output value OUT3 from the second function 122, and generates an authentication code T. At this point, the third output value OUT3 is necessarily received. At this point, the third function 123 may use only a part of the additional data A, the nonce N, the second output value OUT2, or the secret key value at the time of an actual operation. In addition, the third function 123 may determine whether the authentication code T, which is input from the outside, is valid at the time of a decryption verification operation. In the third function, the public information such as the additional data or the public nonce may not be used. Instead of the nonce or secret key, temporary secret information generated from the secret key may be used as an input value of the third function 123.

In an embodiment, at the time of encryption authentication operation in the crypto module 120, entire functions 121, 122, and 123 may be used, and at the time of decryption verification operation in the crypto module 120, some functions 121 and 123 and an inverse transform of the function 122 may be used.

The decryption module 140 positioned outside the crypto module may be realized with a decryption function 142 identical or similar to the second function 122 of the crypto module 120. The decryption function 142 receives the output value OUT1 of the first function 121 of the crypto module 120 or a modified value thereof OUT1' and decrypts the ciphertext C into the plaintext M without information on the secret key K. At this point, the public additional data may be additionally used in the decryption function. Whether the value OUT1' associated with (or related to) an entirety of or a part of the output value OUT1 of the first function 121 is transmitted to the decryption module 140 may be determined according to whether the input authentication code T is valid.

In an embodiment, the associated value is not an arbitrarily independent value, but refers to a case where one value influences another value. In another embodiment, the associated value may mean that a part of information on the other value is exposed through the one value. In another embodiment, the associated value means that the two value themselves have association. On the other hand, when there are two values of a and b, and the two values of a and b are defined to have a relation of a=b XOR r (where r is a random secret value), since the value of b may not be inferred from the value of a, a and b may be referred not to have association. In other words, if a and b are referred to have association, when a relation of a=f(b) is established by a certain function f that does not include secret information, a and b are referred to have association through the function f in the present invention.

Like this, a value delivered to the external decryption module 140 becomes OUT1' associated with OUT1. At this point, a necessary condition is that the external decryption module may obtain, from T1', minimum information for decrypting a ciphertext from OUT1'. Like this, it is the feature of the present invention that the crypto module delivers a value associated with an internal state value thereof to the external decryption module. The present invention is also designed to maximize an efficiency by delivering OUT1' to the decryption module only once, not several times. When the authentication code T is valid, a value related to an entirety or a part of the output value OUT1 of the first function 121 is transmitted to the decryption module 140. In addition, since the first function 121, the second function 122, and the third function 123 are almost similarly used without a change, an implementation cost may be minimized.

In detail, encryption authentication and decryption verification processes using the crypto module 120 and decryption module 140 will be described in detail.

Firstly, the encryption authentication process will be described as follows. When the encryption authentication process is performed through the crypto module 120, additional data A and a plaintext M are received as an input from the outside. Here, the A may be a bin string or a value of A may not exist. In addition, the nonce value N may be a public value or a secret value. The nonce value may be received from the outside or not. The nonce value may be a random value or a counter value, or may be generated to have a certain pattern.

Then, the first function receives A, N, and K as an input inside the crypto module 120 (at this point, when N is temporary secret information, the secret key K may not be necessary), and outputs the first output value or the second output value (at this point, the second output value may not exist, while the first output value is essentially necessary). At this point, an entirety or a part of the first output value may be significantly used later in the decryption module 140. However, it is not necessary to store the first output value in the encryption authentication process.

Then, the second function receives the plaintext M in a block unit by using the first output information to generate ciphertext blocks and output the ciphertext blocks to the external device, and finally outputs the third output value. At this point, the crypto operation may be performed in a unit of several blocks summed without processing the plaintext or the ciphertext in a block unit. At this point, the public information such as the additional data or the public nonce may be used in the second function.

In the end, the third output value is received (at this point, there may not be the second output value nor be used) by using the third function to generate a final authentication code T and deliver the final authentication code T to the external device. The third function may use public information therewith besides the secret information.

The decryption verification process using the crypto module 120 and the external decryption module 140 will be described. In a case of performing the decryption verification, the crypto module receives, as an input, the addition information A, the ciphertext C, and the authentication code T from the outside. In some cases, when N is a public value, N may be received from the outside. In some cases, the additional data may not be present. In some cases, public information such as a counter may be received as an input.

Then, the first output value is generated by using the first function (at this point, second output value information may not be present nor be necessary), and at this point, a value associated with an entirety or a part of the first output value is stored in a memory inside the crypto module 120. Then an inverse operation process of the second function is performed. At this point, input values of the inverse operation process of the second function are the first output value and the ciphertext. (The ciphertext at this point may not be an entire ciphertext. For example, a remaining ciphertext except for C0 generated by using the secret information may be applied as the input value of the second function.) In addition, a value corresponding to the third output information is calculated in a state where the plaintext is not delivered to the external device. Here, the public information such as the additional data or the public nonce may be used therewith in order to perform the inverse operation process.

In the end, the third function inside the crypto module 120 generates an authentication code value T' using the third output value (at this point, the second output may not be necessary). When T given from the external device and T' are compared and T matches T', the crypto module delivers a value OUT1' related to the first output value OUT1, which is safely stored in a memory inside the crypto module, to the external decryption module 140 (at this point, OUT1 and OUT1' may be the same or different. OUT1' may be partial information of OUT1. However, an entirety or a part of information of OUT1, which is necessary for decryption, should be obtained by using OUT1'). Finally, an external device including the crypto module and the decryption module may decrypt the ciphertext into a final plaintext by using a second function' 142 inside the decryption module 140. At this point, for decryption, the public information such as the additional data or the public nonce may be used.

In briefly, at the time of encryption authentication according to the FIG. 1, operations are performed in the order of the first function → the second function → the third function, and at the time of decryption verification, operations are performed in the order of the first function → storing information associated with first output value → inverse transform of the second function → the third function → the second function'.

FIG. 2 illustrates a first embodiment of an encryption authentication method according to an embodiment of the present invention. Referring to FIG. 2, the crypto module 120 receives the secret key K, the nonce N, the additional data A, and the plaintext M by using the first, second, and third functions 121, 122, and 123, and outputs the ciphertext C and the authentication code T.

The first function 121 receives the secret key K, the nonce N, and the additional data A and outputs the first output value OUT1 and the second output value OUT2. At this point, only a part of the secret key, the nonce, and the additional data may be used. At this point, in some cases, there may not be the second output value OUT2. The second function 122 receives the first output value OUT1 and the plaintext M, and outputs the ciphertext C and the third output value OUT3. At this point, at the time of generating the ciphertext, the public information such as the additional data or the public nonce may be used together. The third function 123 receives the secret key K, the nonce N, the associate information A, the second output value OUT2, and the third output value OUT3, and outputs the authentication code T. Here, the secret key K is a secret key value, the nonce N is a random nonce value or a counter value, and the additional data A is public additional data. At this point, only a part of the secret key, the nonce, the additional data, and the second output value may be used in the third function.

Furthermore, an alteration verification and final plaintext output process according to the encryption authentication method illustrated in FIG. 2 will be the following. The following process is performed for verifying whether the ciphertext C and the authentication code T are altered and for outputting a final plaintext M.

In a first step, the crypto module 120 receives the additional data A, the ciphertext C, the authentication code T, and the nonce N from the electronic apparatus 100. Here, the nonce N may be received from the outside of the crypto module 120, or may be generated in the crypto module 120. Here, values received from the electronic apparatus 100 are not transmitted to the crypto module 120 at a time, but are transmitted block by block to a small memory inside the crypto module 120 (at this point, when there is a spare in the memory, several blocks may be transmitted at a time). The third function 123 of the crypto module 120 calculates the authentication code T.

In a second step, the first function 121 of the crypto module 120 calculates and stores the first output value OUT1 by using the input secret key K. In addition, the third function 123 verifies whether the final authentication code T is correct. When the calculated authentication code T does not match the input authentication code T, the input ciphertext C is treated as altered. Accordingly, any part of the plaintext is not output.

In a third step, when values of the calculated authentication code T and the input authentication code T match, the crypto module 120 outputs a value OUT1' associated with an entirety or a part of the first output value OUT1 of the first function 121 to the decryption module 140 in the outside of the crypto module 120.

In a step 4, the decryption module 140 receives the OUT1' having output to the outside of the crypto module 120 by using the decryption function 142, and decrypts the ciphertext C into a final plaintext M. At this point, in a process for decryption, the public information such as the additional data or the public nonce may be used together.

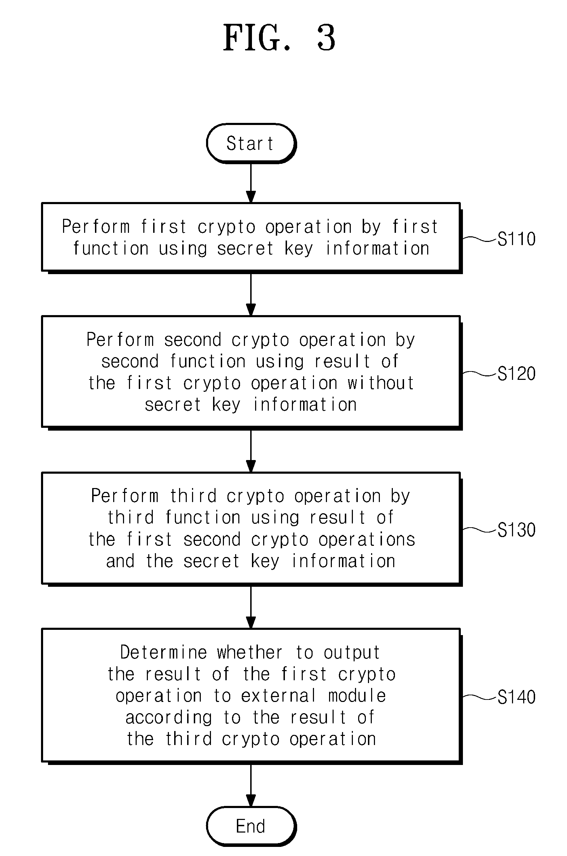

FIG. 3 is a flowchart of an exemplary encryption authentication method according to an embodiment of the present invention. Referring to FIGS. 1 to 3, the encryption authentication method is as the following.

A first crypto operation is performed by the first function 121 (see FIG. 1) by using secret information (e.g. K and N) (step S110). A second crypto operation is performed by the second function 122 (see FIG. 1) by using a result of the first crypto operation without the secret information (step S120). A third crypto operation is performed by the third function 123 (see FIG. 1) by using the secret information and the result of the first crypto operation and a result of the second crypto operation (step S130). According to a result value of the third crypto operation, whether the result value of the first crypto operation or a part thereof is transmitted to the external decryption module 140. For example, when the authentication code T' calculated in the third function 123 matches with the input authentication code T, the result value OUT1 of the first crypto operation is transmitted to the decryption module 140 and a decryption operation for the ciphertext C is performed (step S140). In some cases, a value delivered to the decryption module 140 may be the result value of the first crypto operation itself or a part thereof, or any information related thereto. For example, when a value is OUT1', which is obtained by applying an arbitrary replacement function (at this point, the inverse operation should be efficient) to OUT1, the decryption module may effectively calculate OUT1 from OUT1'.

An encryption authentication method according to an embodiment of the present invention uses secret information, when the authentication code is verified in the crypto module 120, and performs the decryption operation for the ciphertext C without using the secret information in the external decryption module 140. Accordingly, the electronic apparatus of the present invention may minimize a memory use inside the crypto module 120 at the time of decryption operation, compared with that of a typical one.

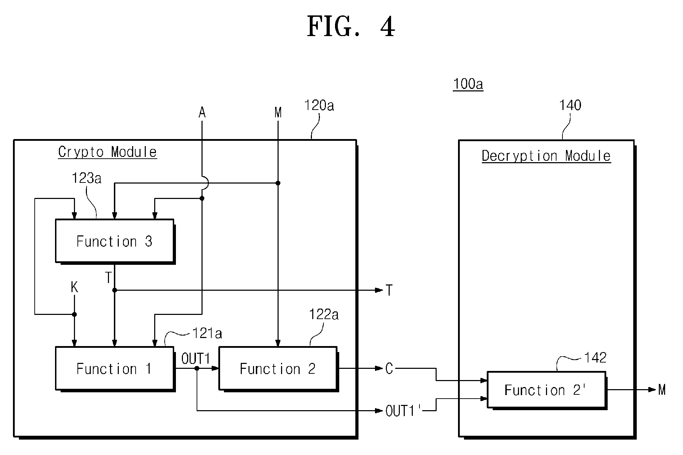

FIG. 4 is a block diagram of another exemplary electronic apparatus according to another embodiment of the present invention. Referring to FIG. 4, the encryption authentication method is characterized not by receiving the nonce N, compared with that illustrated in FIG.1. The crypto module 120a is configured with the first function 121a, the second function 122a, and the third function 123a.

The crypto module 120a illustrated in FIG. 4 has different encryption authentication and decryption verification sequences from those in FIG 2. In the encryption authentication process, the third function → the first function → the second function process is undertaken, and in the decryption verification process, the first function → storing a value associated with the first result value → inverse transform of the second function → the third function → the second function' process is undertaken. Here, the second function' means a function similar or identical to the second function in the external decryption module as described in relation to FIG. 1. Here, the term 'similar' means that when a value is received which is associated with the first result value received by the decryption module, a process for removing a value necessary for decryption from among the original first result value is added accordingly.

The reason why the operation sequences of FIGS. 4 and 1 are different is that in a case of the encryption authentication process in the crypto module 120a, the authentication code T may not be calculated without calculation of the third function 123a and the authentication code T influences the first and second functions. The crypto module 120a receives the additional data A and the plaintext M in a block unit from the outside to generate the authentication code T with the third function 123a and hands over the T value to the first function. At this point, the public information, such as the public nonce or the counter value, in addition to the additional data may be input from the outside. The first function 121a outputs OUT1 by using the secret key K and the authentication code T or the additional data A. At this point, temporary secret information such as a temporary secret nonce may be used instead of the secret key. In the end, the second function receives OUT1 and the plaintext M from the outside in a block unit (at this point, the public information such as additional data or the public nonce may be input therewith), generates a final ciphertext in a block unit,, and delivers the authentication code T and a ciphertext block to the external device in a block unit. Where there is a spare in memory size of the crypto module, several blocks may be generated together and processed without processing in a block unit.

In FIG. 4, for the case of decryption verification process inside the crypto module 120a, the crypto module 120a receives the associate information A, the authentication code T, and the ciphertext C in a block unit from the outside and performs the first function 121a to generate OUT1. At this point, in some cases, a value of the nonce N may be received from the outside. In some cases, the additional information may not be present. In addition, the crypto module delivers, to the third function 123a, the plaintext M by using OUT1 through the inverse transform of the second function 122a in a block unit (or in a unit of several blocks) to help the third function to generate T'. At this point, when T and T' are the same and the authentication code is correct, the crypto module delivers, to the decryption module located outside the crypto module, OUT1' related to the entirety or a part of OUT1. When T and T' are not the same, an error is generated. Finally, in a similar scheme as illustrated in FIG. 1, the external decryption module calculates a value necessary for decrypting OUT1 from OUT1' through a function identical or similar to the second function 122a and then decrypts the ciphertext C to obtain the plaintext M. At this point, the decryption module may use the public information such as the associated data or the public nonce as an input.

Hereinafter, detailed embodiments of the encryption authentication and decryption verification according to an embodiment of the present invention will be described.

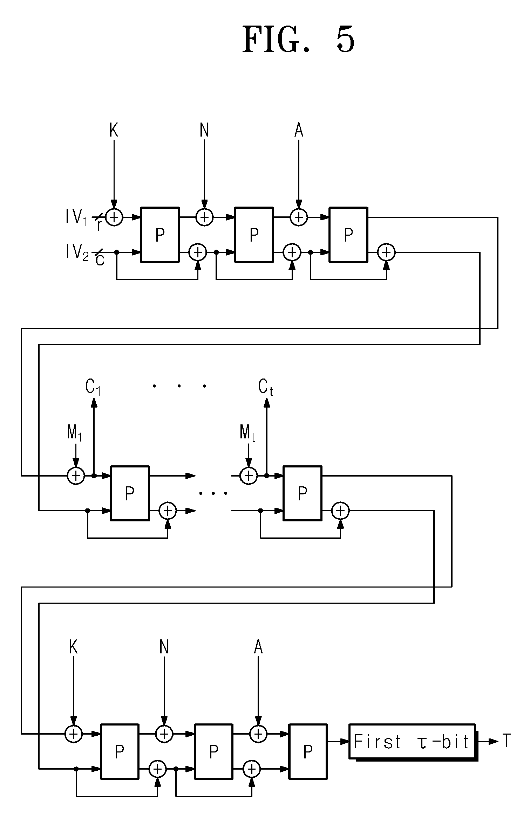

FIG. 5 illustrates an example of a replacement function-based encryption authentication method. Referring to FIG. 5, IV1 and IV2 are initial values that are arbitrary fixed constants, K is a secret key, N is a public nonce value or a counter value, and A is additional data. Here, K, N, and A are respectively assumed to be r bit data (where r is a natural number) after padding. At this point, any efficient reversible padding may be used.

The crypto module 120 receives block by block starting from a first plaintext block M1 in a block unit of r bits from the outside. As illustrated in FIG. 5, the crypto module 120 generates an r bit block C1, which is a first ciphertext, to transmit it to the outside of the crypto module 120. Similarly, the ciphertext block is generated once for each block unit and is processed online (in real time). Plaintext blocks at this pint are plaintext block values after padding such as pad (Mt)=M1...Mt obtained by using any reversible padding method. The crypto module 120 receives a last plaintext block Mt and generates a final ciphertext block Ct to transmit it to the outside. Finally, the crypto module 120 generates an authentication code T as illustrated in FIG. 5 by using K, N, and A.

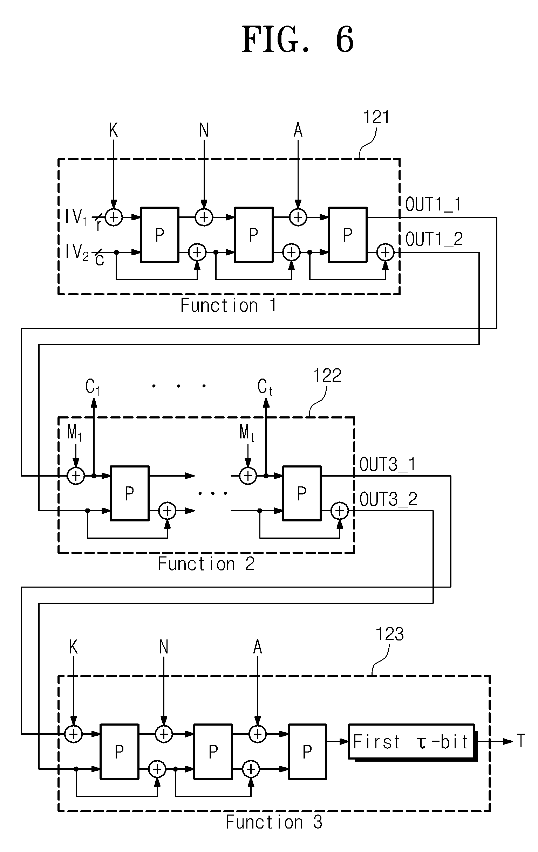

FIG. 6 illustrates a decryption verification process corresponding to the replacement function-based encryption authentication method illustrated in FIG. 5. Referring to FIG. 6, a decryption verification process based on a crypto module having a limitation in memory size is as the following. For the decryption verification process, the first function 121 of the crypto module 120, having known a secret key K, firstly receives a nonce N and additional data A from the outside and generates a first output value pair (OUT_1, OUT_2). The generated first output value pair (OUT_1, OUT_2) is temporarily stored in an internal memory of the crypto module 120. In addition, the ciphertext C is sequentially input from the outside in a block unit. Here, the first output value pair is defined as an internal state value after the secret key, the nonce, and the additional data are processed, and may also be defined as an internal state value after applying the secret key or as in internal state value after applying the nonce.

At this point, the second function 122 never transmits a plaintext block value to the outside, but processes the ciphertext block information in real time without storing it and generates a third output value pair (OUT3_1, OUT3_2).

The third function 123 finally receives a value of the authentication code T from the outside and checks whether a calculated authentication code T is identical to the input authentication code T. At this point, when the value of the authentication code T is correct, the first function 121 transmits the first output value pair (OUT1_1, OUT1_2) of the first function 121 to the outside. On the other hand, when the value of the authentication code T is not correct, the decryption verification process is stopped and an error message is transmitted to the outside. The external decryption module 140 may decrypt the ciphertext C into the plaintext M by using the output first output value pair (OUT1_1, OUT1_2). The decryption module may use the public information such as the associated data or the public nonce as an input at the time of decryption.

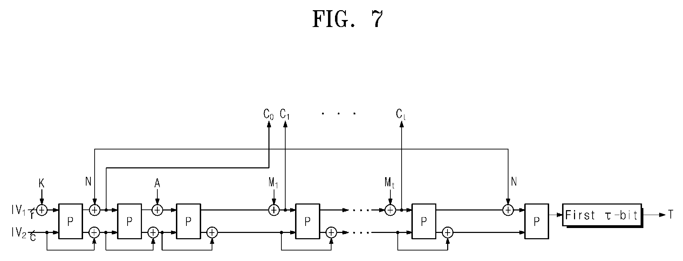

FIG. 7 illustrates an exemplary replacement function-based encryption authentication method for a case of using a secret nonce. Referring to FIG. 7, the encryption authentication method is for a case where a nonce N is not public, compared to that illustrated in FIG. 5. A value of the nonce N may be generated from C0 only in a case where the secret key K is known.

The encryption authentication process is as the following. The crypto module 120 firstly receives the additional data A from the outside, a secret nonce N is randomly generated internally, and C0 generated from the secret nonce is transmitted to the outside by using the input secret key K. Each message block is received from the outside, one by one is processed from M1 and ciphertext blocks are generated in real time and transmitted to the outside. In the end, the authentication code T is generated by the secret nonce N and is transmitted to the outside.

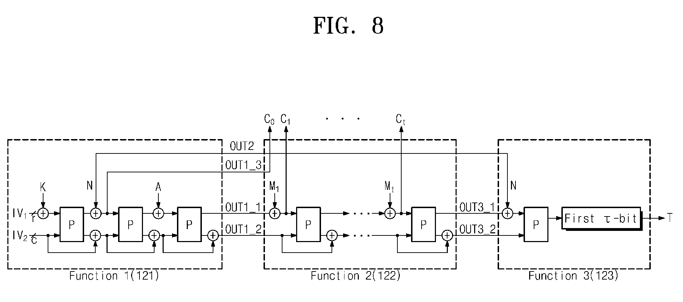

FIG. 8 illustrates a decryption verification process corresponding to the replacement function-based encryption authentication method illustrated in FIG. 7. Referring to FIG. 8, the decryption verification process is as the following. When receiving the additional data A and C0 are received from the outside, the first function 121 calculates the nonce N and calculates the first output value pair (OUT1_1, OUT1_2). The calculated first output value pair (OUT1_1, OUT1_2) is safely stored in the crypto module 120. Here, the first output value pair is defined as an internal state value after the secret key, the nonce, and the additional data are processed, and may also be defined as an internal state value after the first output value pair is applied to the secret nonce.

The second function 122 receives ciphertext blocks one by one to calculate third output values (OUT3-1, OUT3_2). The third function 123 verifies, by using the secret nonce N, whether an authentication code T input from the outside is correct.

When the authentication code T is correct, the first output value pair (OUT1_1, OUT1_2) is transmitted to the external decryption module 140 and the decryption module 140 performs a decryption operation for a directly input ciphertext. At this point, during the decryption process, public information such as the additional data may be used. In addition, instead of directly transmitting the first output value pair, a value obtained by applying the first output value pair to a public replacement function may be transmitted to the decryption module. On the other hand, when the authentication code T is not correct, an error message is transmitted to the outside and the decryption verification process is terminated.

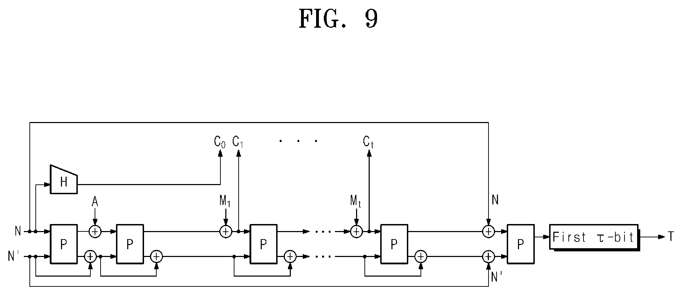

FIG. 9 illustrates an exemplary replacement function-based encryption authentication method using a temporary secret key pair (N, N'). FIG. 9 illustrates a case where the encryption authentication method uses a temporary secret key pair (N, N') without using a shared secret key K. The temporary secret key pair (N, N') is values changing at every time and values shared in advance by two crypto modules by using the shared secret key K. In order to protect the temporary secret key pair (N, N'), a C0 value, which is obtained by hashing N with a hash function H, is generated and the C0 value is transmitted to an opponent crypto module. At this point, it is assumed that a crypto module is able to easily obtain N', which corresponds to N, from N. For example, N'= (K|IN) may be defined by using the secret key K and the hash function H.

A crypto module of the other party, which has known the shared secret key K, may obtain the used temporary secret key pair (N, N') from C0. At this point, in order to efficiently verify whether the temporary secret key pair (N, N') is valid which is temporary secret information corresponding to the C0 value, an index corresponding to the temporary secret key pair (N, N') may be transmitted therewith. Here, the index indicates an index used at the time of generating the temporary secret key with the shared key K. At the time of encryption authentication, the crypto module receives additional data A and plaintext blocks one by one from the outside, and generates ciphertext blocks in real time to transmit them to the outside. At this point, a padding method for a message may be any efficient and reversible method. In addition, in the end, an authentication code T is generated by using the temporary secret key pair and transmitted to the outside, and then the encryption authentication process is terminated.

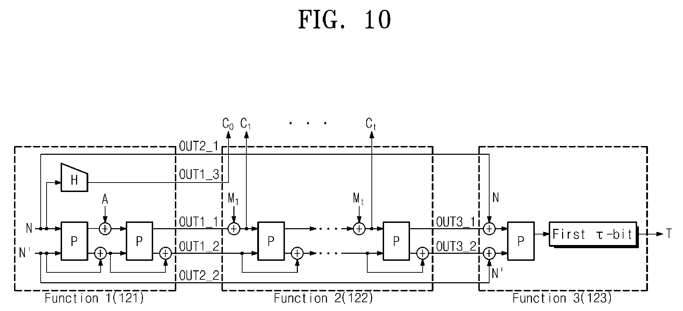

FIG. 10 illustrates a decryption verification process corresponding to the replacement function-based encryption authentication method illustrated in FIG. 9. Referring to FIG. 10, at the time of decryption verification, the crypto module 120 receives the additional data A, the ciphertext blocks, and the final authentication code T one by one in real time from the outside. Firstly, a crypto module, which has known the shared secret key K, may check whether the temporary secret key pair (N, N') used in C0 is available. Here, the check method saves available secret key pairs and hash value thereof in a table inside the crypto module and verifies whether C0 is a value generated with a valid temporary secret key pair. At this point, in order to reduce a search time, an index value may be additionally input to C0.

When the C0 is not valid, the decryption verification process is stopped. On the other hand, when the C0 is valid, the decryption operation is performed by using the corresponding temporary secret key pair (N, N'). Finally when the authentication code T is correct, the first output value pair (OUT1_1, OUT1_2) is transmitted to the external decryption module 140, and the decryption module 140 may decrypt the ciphertext by using the input first output value pair (OUT 1-1, OUT1_2).

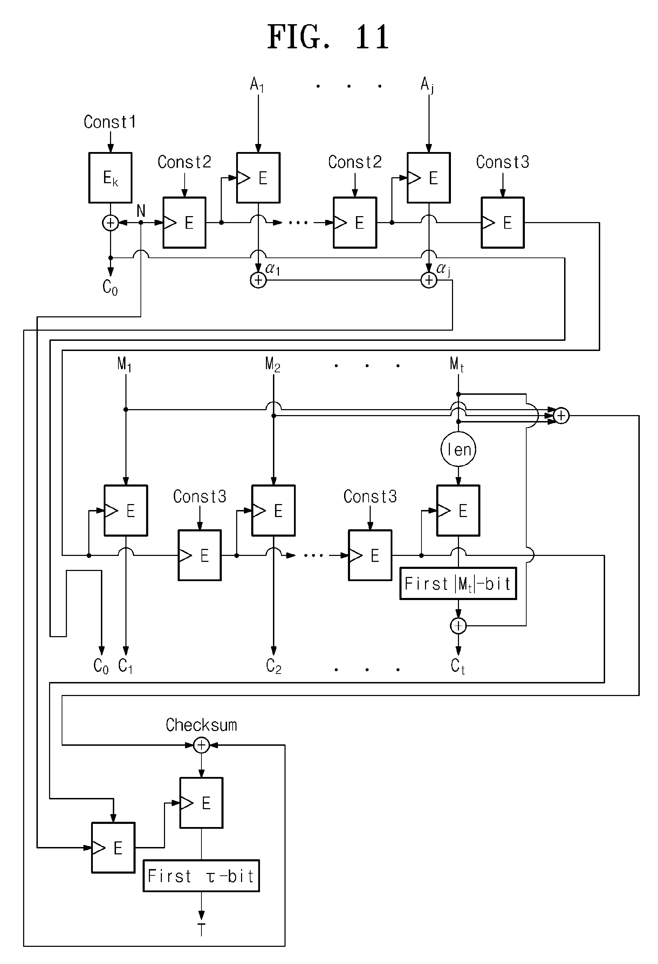

FIG. 11 illustrates an example of a block cipher-based encryption authentication method. Referring to FIG. 11, Const1, Const 2, and Const 3 are different constants, and K is a shared secret key. The crypto module 120 internally generates a random nonce N to generate C0, and then receives additional data A and plaintext block information in real time from the outside to generate a ciphertext and to transmit ciphertext blocks including C0 to an external device in real time. At this point, a padding method for the additional data A may be arbitrary, efficient and reversible. In addition, a padding method for the message is not required. Finally, the crypto module 120 defines that Checksum=α1 xor...xor αj xor M1 xor M2 xor ...xor (Mt||0*) to generate a final authentication code T, transmits the authentication code T to the outside, and terminates the encryption authentication process.

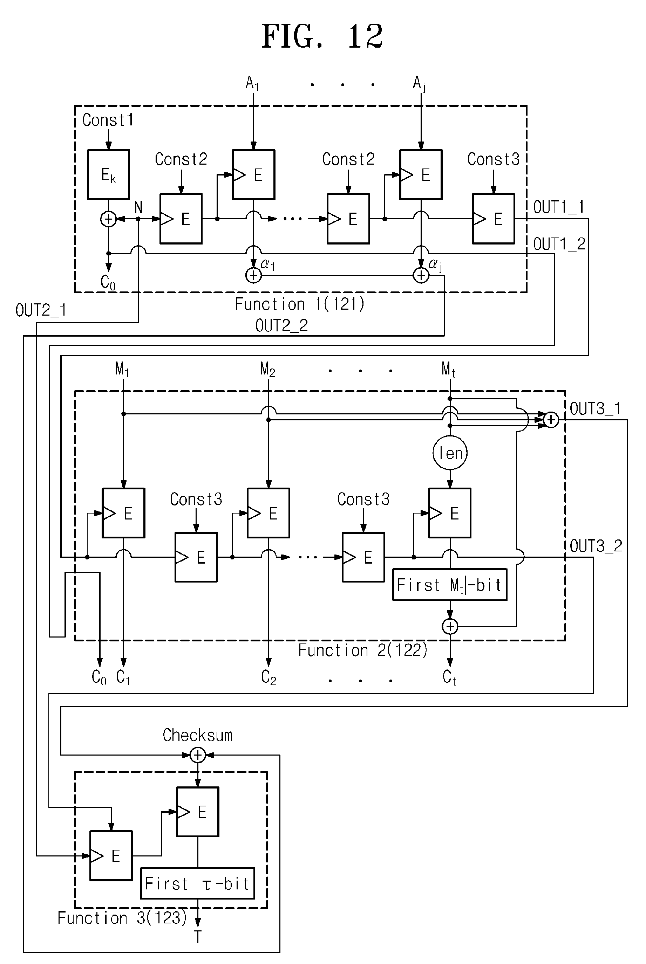

FIG. 12 illustrates a decryption verification process corresponding to the block cipher-based encryption authentication method illustrated in FIG. 11. Referring to FIG. 12, the crypto module 120, which has known the shared secret key K, obtains the random nonce N from C0, and receives the additional data A and ciphertext blocks from the outside in real time to calculate a final authentication code T. In addition, when the final authentication code T is correct, the crypto module 120 transmits the first output value pair (OUT1_1, OUT1_2) to the outside. Then the external decryption module 140 may decrypt the ciphertext by using the first output value pair (OUT1_1, OUT1_2).

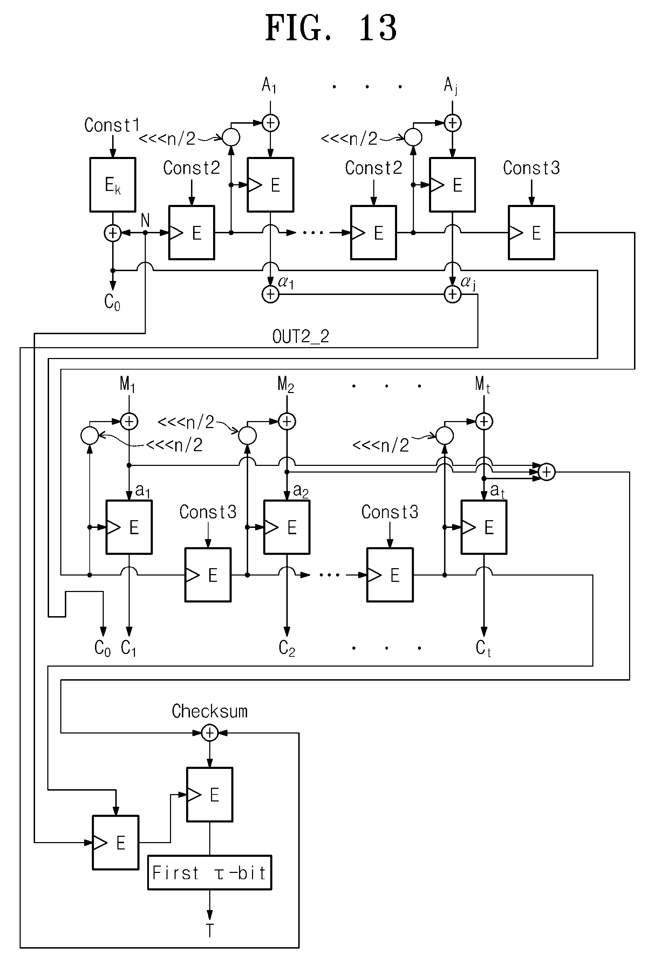

FIG. 13 illustrates an exemplary block cipher-based encryption authentication method in which a checksum generating method and a padding method are changed. Referring to FIG. 13, the block cipher-based encryption authentication method has three differences, compared to those illustrated in FIG. 11. First, at every time of n bit block encryption calculation, a value obtained after circularly shifting a used block key by n/2 bits in the left is XOR-ed with an input value of the block cipher. Second, at the time of generating a checksum, a plaintext block is not used but values of a1,..., at are used as illustrated in FIG. 13. Third, at the time of generating a message block, a message padding method is required.

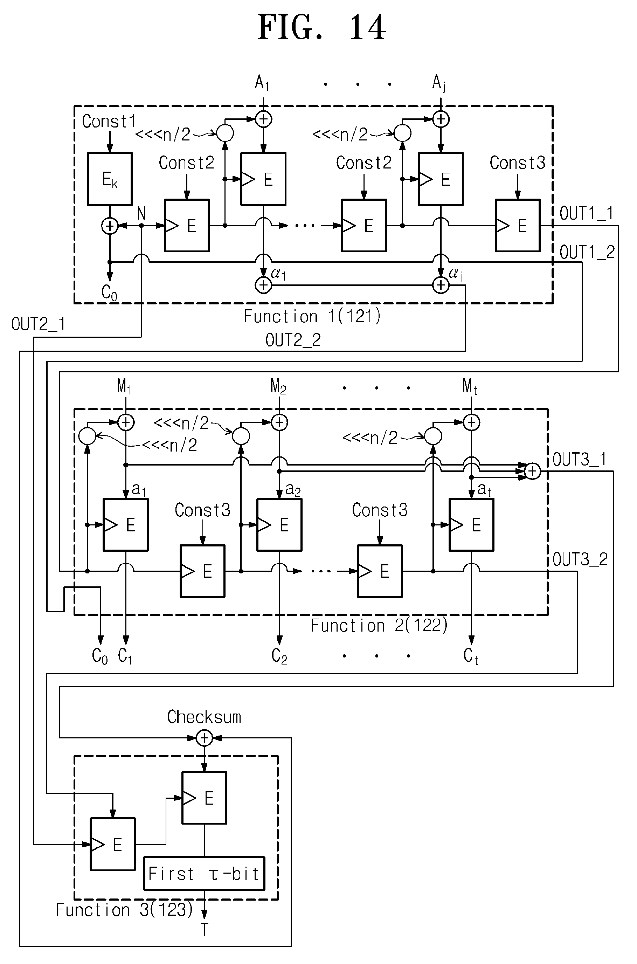

FIG. 14 illustrates a decryption verification process corresponding to the block cipher-based encryption authentication method illustrated in FIG. 13. The decryption verification process illustrated in FIG. 14 is similar to that illustrated in FIG. 12, and accordingly a description thereabout will be omitted.

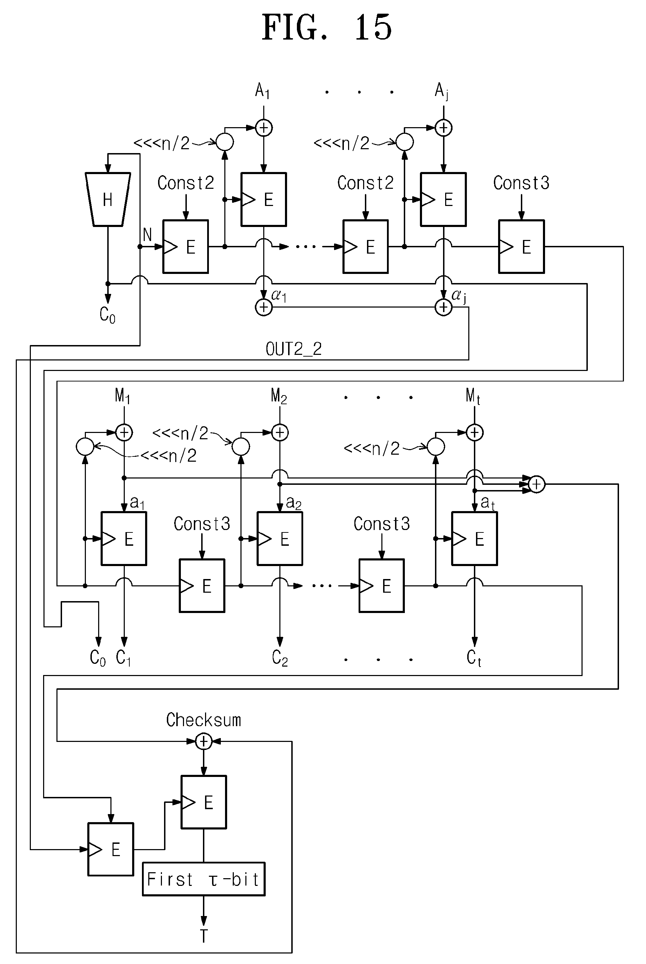

FIG. 15 illustrates an exemplary block cipher-based encryption authentication method using temporary secret information such as a temporary secret key. Referring to FIG. 15, all processes in a block cipher-based encryption authentication method are identical to those illustrated in FIG. 13 except for a method for generating C0. In the example of FIG. 15, C0 is generated by using a hash function H. This method is used when available temporary secret key values are synchronized from the shared secret key K between two crypto modules.

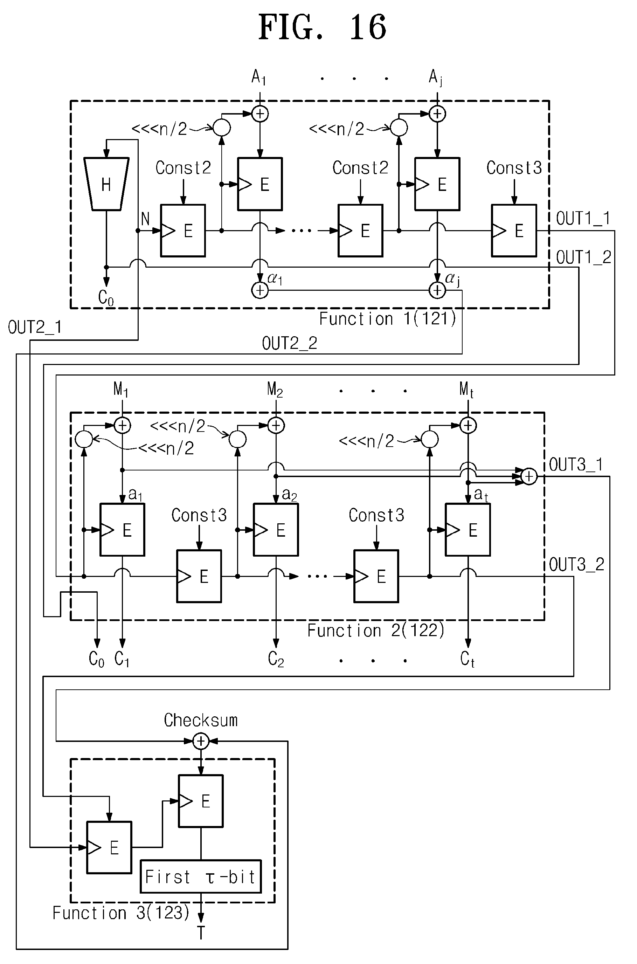

FIG. 16 illustrates a decryption verification process corresponding to the block cipher-based encryption authentication method illustrated in FIG. 15. Referring to FIG. 16, when C0 is valid, decryption verification is performed and when C0 is not valid, the decryption verification is stopped.

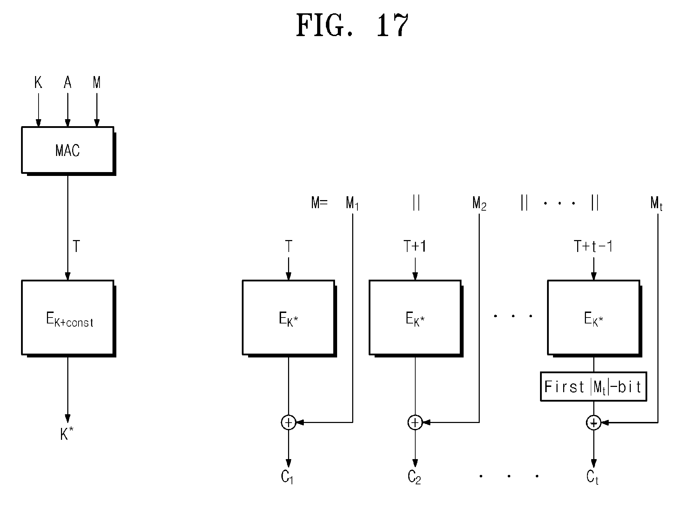

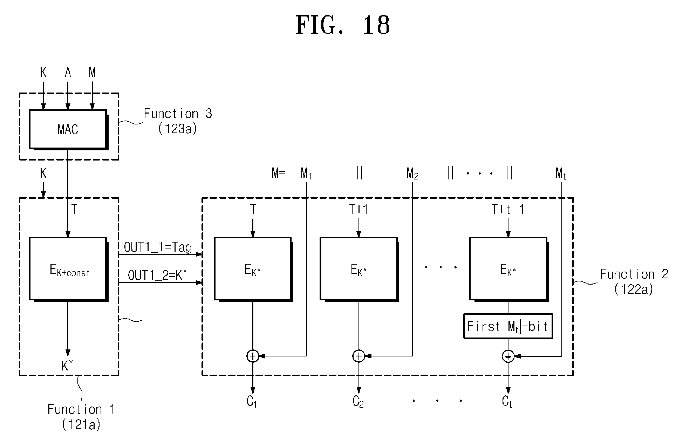

Furthermore, detailed embodiments according to the encryption authentication and decryption verification schemes will be described with reference to FIGS. 17 and 18.

FIG. 17 illustrates an exemplary block cipher-based encryption authentication method in which a nonce or counter value is not used. As illustrated in FIG. 17, a crypto module 120 receives, as an input, a key K, associated data A, and a plaintext M to generate an authentication code T by using a message authentication code (MAC) function (e.g. possibly HMAC) having pseudo-random property. In some cases, the additional data may not be received as the input. In some cases, temporary secret information may be used instead of the secret key K. In this case, as illustrated in FIG. 15, validity of the temporary secret information may be verified by using C0 as illustrated in FIG. 15.

At this point, the MAC function may be sequentially processed in a block unit or in a unit of a small number of blocks. This is because at the time of decryption verification, when the decryption is performed by using a counter (CTR) mode, a plaintext block or plaintext blocks are received in a block unit or a small number of blocks, and the plaintext block or the plaintext blocks are delivered to the MAC function as an input thereof to generate the authentication code T in real time. In addition, the crypto module 120a encrypts the authentication code T to generate K* at the time of encryption authentication by using a key K shared between the crypto modules, and in the end, generates a ciphertext for the input plaintext with the authentication code T adopted as a counter in the CTR encryption mode and a value of K* adopted as the secret key K in the CTR mode. At this point, the value of K* is used as a one-time cipher key and a ciphertext may be generated by applying the one-time cipher key generated like this to various cipher modes as well as the CRT mode illustrated in FIG. 17.

FIG. 18 illustrates a decryption verification process corresponding to the block cipher-based encryption authentication method illustrated in FIG. 17. Referring to FIG. 18, the decryption verification process is as the following. An MAC function operation process corresponds to the third function illustrated in FIG. 4, a process for generating the value of K* corresponds to the first function 121 illustrated in FIG. 4, and final CTR encryption corresponds to the second function 122 illustrated in FIG. 4. As illustrated in Fig. 18, the first output value OUT1_1 becomes the authentication code T and the first output value OUT1_2 corresponds to K*.

For decryption verification, the crypto module 120a firstly receives a nonce N, additional data A, and a ciphertext C, performs CTR decryption and at the same time, verifies a MAC value by using a message block obtained in real time, and verifies the authentication code T. When the authentication code T is not correct, the decryption verification is stopped. On the other hand, when the authentication code T is correct, the crypto module 120 calculates the ciphertext value of K* corresponding to the authentication code T by using the shared secret key and transmits the value of K* to the external device. Finally, the external device performs a decryption operation for the ciphertext by using an authentication code T and K*.

On the other hand, the foregoing description is about specific embodiments for practicing the present invention. The present invention encompasses the technical spirit of abstract and conceptual idea that may be used as a future technology as well as specific and actually useable means itself.

### INDUSTRIAL APPLICABILITY

The present invention is applicable to all devices performing a crypto operation.

## Claims

1. A method for performing an encryption authentication and a decryption verification in an electronic apparatus including a crypto module and a decryption module, the method comprising:
performing encryption authentication by performing a first crypto operation with a first function by using secret information, performing a second crypto operation with a second function by using a result value of the first crypto operation without the secret information, and performing a third crypto operation with a third function by using result values of the first and second crypto operations and the secret information, or by using the result value of the second crypto operation and the secret information; and
performing decryption verification by determining whether to output a value related to an entirety of or a part of the result value of the first crypto operation to the decryption module according to a result value of the third crypto operation.

2. The method of claim 1, wherein the secret information is a secret key, temporary secret information, or a secret nonce.

3. The method of claim 2, wherein the secret information is generated inside the crypto module.

4. The method of claim 2, wherein the first function receives additional data from an outside of the crypto module.

5. The method of claim 2, wherein a result value of the first function comprises at least one first output value or at least one second output value,
wherein the at least one first output value is input to the second function.

6. The method of claim 5, wherein the second function encrypts a plaintext into a ciphertext at a time of the encryption authentication.

7. The method of claim 5, wherein the third function receives the at least one second output value of the first function or an output value of the second function, and generates an authentication code.

8. The method of claim 1, wherein the third function compares the generated authentication code and an input authentication code at a time of the decryption verification to determine whether the authentication code is valid.

9. The method of claim 8, wherein a value associated to an entirety or a part of the at least one output value is not output to the decryption module and the decryption operation is terminated.

10. The method of claim 8, wherein when the authentication code is valid, a value associated with an entirety or a part of the at least one output value of the first function is output to the decryption module.

11. The method of claim 10, wherein the decryption module decrypts a cryptotext by using the value associated with an entirety or a part of the at least one output value in the decryption module.

12. The method of claim 10, wherein the at least one first output value or the at least one second output value is temporarily stored in an internal memory of the crypto module.

13. An electronic apparatus comprising:
a crypt module configured to perform encryption authentication with a first function that uses secret information, a second function that does not use the secret information, and a third function that uses the secret information, or performing decryption verification with the first and third functions; and
a decryption module configured to receive a result value of the first function according to a result value of the third function at the time of the decryption verification, and decrypt a cryptotext by using a value associated with the result value of the first function.

14. The electronic device of claim 13, wherein each of the first, second, and third functions is based on a replacement function-based function.

15. The electronic device of claim 14, wherein each of the first and third functions performs the encryption authentication by using a shared secret key and a nonce.

16. The electronic device of claim 14, wherein each of the first and third functions performs the encryption authentication by using temporary secret information.

17. The electronic device of claim 13, wherein each of the first, second, and third functions is based on a block cipher-based function.

18. A method of encryption authentication and decryption verification of an electronic apparatus, which comprises a crypto module and a decryption module, the method comprising:
performing encryption authentication by a first crypto operation for generating a first output value by using an authentication code and secret information in a first function, performing a second crypt operation for outputting a ciphertext by using the first output value of the first crypto operation and a plaintext without the secret information in a second function, and generating the authentication code by using the secret information and the plaintext in a third function; and
performing decryption verification by determining whether to output a value associated with an entirety or a part of a result value of the first crypto operation to the decryption module according to a result value of a third crypto operation.

19. The method of claim 18, wherein the first and third functions perform the encryption authentication not by using a nonce value or a counter value, but by using a secret key shared between crypto modules.

20. The method of claim 18, wherein the first function generates a cipher key to be used in the second function by using the shared secret key and the authentication code.
